# EUROPÄISCHE PATENTSCHRIFT

(11) **EP 3 802 289 B1**
(45) Veröffentlichungstag und Bekanntmachung des Hinweises auf die Patenterteilung: **31.08.2022**
(21) Anmeldenummer: 19730131.0
(22) Anmeldetag: 05.06.2019
(51) Int. Cl.: B62D 25/12, B62D 29/00, B62D 25/10

(54) **KLAPPE FÜR EIN KRAFTFAHRZEUG UND KRAFTFAHRZEUG**
FLAP FOR A MOTOR VEHICLE, AND MOTOR VEHICLE
CAPOT CONÇU POUR UN VÉHICULE AUTOMOBILE ET VÉHICULE AUTOMOBILE

(30) Priorität: 08.06.2018 DE 102018209118
(43) Veröffentlichungstag der Anmeldung: 14.04.2021
(73) Patentinhaber: Audi AG, 85045 Ingolstadt (DE)
(72) Erfinder: BRYMERSKI, Wojciech, 70806 Kornwestheim (DE); PFALLER, Bernhard-Konrad, 85095 Denkendorf (DE)
(86) Internationale Anmeldenummer: PCT/EP2019/064704
(87) Internationale Veröffentlichungsnummer: WO 2019/234121

(56) Entgegenhaltungen:
- EP-A2- 1 512 613
- WO-A1-2010/017847
- DE-A1- 2 934 430
- DE-A1-102005 050 372
- GB-A- 2 437 946
- JP-A- 2008 265 696
- JP-A- 2014 113 930
- JP-A- 2014 201 110

## Beschreibung

Die Erfindung betrifft eine als eine Motorhaube ausgebildete Klappe für ein Kraftfahrzeug, umfassend ein eine im Einbauzustand nach außen gewandte Außenfläche umfassendes Außenteil aus einem Faserverbundkunststoff und ein gegenüberliegendes Innenteil. Daneben betrifft die Erfindung ein Kraftfahrzeug mit einer solchen Klappe.

Derartige Klappen, die meist größerflächig ausgestaltet sind, kommen bei einem Kraftfahrzeug beispielsweise als Frontklappe, Motorhaube oder Heccklappe bzw. Kofferraumdeckel zum Einsatz. Ihr Außenteil bildet die äußere Abdeckung, mithin die Außenseite des Kraftfahrzeugs.

Bei Fahrzeuggroßserien werden derartige Klappen üblicherweise aus Metall, insbesondere Stahl oder Aluminium, oder aus Kunststoff gefertigt. Dabei wurde insbesondere bereits vorgeschlagen, sie aus faserverstärkten Kunststoff (Faserverbundkunststoff - FVK) anzufertigen, wobei beispielsweise Glas-oder Kohlenstofffasern eingesetzt werden können. Vollständig aus Faserverbundkunststoff bestehende Klappen können auch als Faserverbundklappen bezeichnet werden.

Faserverbundklappen werden insbesondere im Sportwagensegment bei Kleinserien eingesetzt, wo eine bessere Performance hinsichtlich der Steifigkeit und ein geringeres Gewicht gefordert werden. Die Klappen werden dabei in monolithischer oder differentieller Bauweise gefertigt, wobei bekannte Technologien wie RTM-Verfahren (resin transfer molding), Prepreg-Pressverfahren unter Verwendung vorimprägnierter Faserhalbzeuge oder auch SMC-Pressverfahren (sheet molding compound) zum Einsatz kommen können.

Faserverbundfrontklappen wurden im Stand der Technik, beispielsweise in US 7,497,507 B2, bereits vorgeschlagen. DE 10 2015 011 806 A1 offenbart ein Verfahren zur Herstellung eines Klappenteils aus faserverstärktem Kunststoff, wobei das Klappenteil eine Außenseite eines Kraftfahrzeugs bildet und einen umlaufenden Kantenbereich aufweist. Dort wird vorgeschlagen, einen Stapel aus mehreren plattenförmigen, mit einem Harz vorimprägnierten Faserhalbzeugen auszubilden, der in einer erwärmten ersten Form zur Erzeugung eines dreidimensional geformten Vorformteils unter Verbindung der Faserhalbzeuge vorgeformt wird, wonach das Entformen des Vorformteils in einer erwärmten zweiten Pressform, die zumindest abschnittsweise in dem den umlaufenden Kantenbereich ausbildenden Formbereich einen sich erweiternden Querschnitt mit einer Rundung aufweist, in welchen Formbereich das in der zweiten Pressform erwärmte, viskose Harz und Fasern einfließen, erfolgt. Dabei und auch allgemein ist ein wichtiger Aspekt bei der Ausführung des Klappenteils in faserverstärktem Kunststoff, dass die umlaufende Außenkante die Fußgängerschutzanforderungen erfüllt.

Allgemein ist es bei Klappen, insbesondere Frontklappen, für Kraftfahrzeuge bekannt, diese aus zwei unterschiedlichen Klappenteilen, nämlich einem Außenteil und einem Innenteil, zu bilden. Die Ausbildung sowohl des Außenteils als auch des Innenteils aus einem Faserverbundkunststoff erfordert jedoch die aufwändige Auslegung zweier Werkzeuge zur Fertigung von Außenteil und Innenteil sowie gegebenenfalls einer entsprechenden Verklebeeinrichtung. Auch bezüglich der Ankopplung weiterer Funktionselemente, beispielsweise entsprechender Scharnierkomponenten, existieren die Herstellung und den Einsatz erschwerende Hindernisse.

WO 2010/017847 A1 betrifft ein Fahrzeugflächenbauteil, das in außenseitiger Anordnung an einem Fahrzeug anbringbar ist und eine Solarzellenanordnung aufweist, die an ihrer Innenseite mit einer tragenden Schicht verbunden ist und die zur Außenseite des Fahrzeugs mit einer Deckschicht versehen ist. Dabei soll die tragende Schicht in Composite-Leichtbauweise hergestellt sein. Ein eigensteifes leichtes Composite-Leichtbauteil biete eine besonders geeignete Trägerstruktur für Solarzellenanordnungen. Eine sonst übliche innenseitige Abstützung durch eine massive Trägerplatte aus Glas entfällt völlig.

JP 2008-265696 A betrifft ein Herstellungsverfahren für eine Motorhaube eines Kraftfahrzeugs. Dabei soll eine Motorhaube unter Verwendung von Glasfaserkunststoffen geschaffen werden, die kostengünstig ist, während dennoch die Oberflächensteifheit und der Fußgängerschutz gegeben ist. Entsprechend wird vorgeschlagen, drei verschiedene Teile zu verwenden, nämlich ein äußeres Teil aus Glasfaserkunststoff, ein rahmenförmiges inneres Teil aus Faserkunststoff und ein balkenförmiges inneres Teil. Das balkenförmige innere Teil kann vorzugsweise aus Metall, Harz oder faserverstärktem Kunststoff bestehen. Dieses Dokument offenbart ebenfalls eine Motorhaube gemäß dem Oberbegriff des Anspruchs 1.

JP 2014-201110 A betrifft ein Composite-Material und ein Motorhaubenteil, welches dieses nutzt. Das Problem dort ist es, dass bei der Verwendung von faserverstärkten Harzen ein hochgradig steifes Material im Vergleich zu Metallen entsteht, welches problematisch beim Aufprall mit einem Insassen oder einem Fußgänger ist. Mithin ist die dortige Aufgabe, ein Composite-Material bereitzustellen, welches sich bei Aufprall leicht verändern lässt. Zur Lösung dieses Problems werden letztlich bestimmte strukturelle Ungleichheiten, mithin Sollbruchstellen, vorgeschlagen.

DE 29 34 430 A1 betrifft ein Bauteil mit einer Sandwichplatte und einem Verstärkungsteil. Dabei geht es insbesondere auch um Klappen in Personenkraftwagen. Das Problem, das sich bei solchen Sandwichplatten stellt, ist das Anbringen von Aufnahmen für Scharniere und ähnliche Befestigungsteile, wozu Verstärkungen notwendig sind. Entsprechend soll ein Bauteil derart weitergebildet werden, dass bei einfacher Herstellbarkeit vom Verstärkungsteil her hohe Kräfte in die Sandwichplatte eingeleitet werden können, wozu die Kräfte vom Verstärkungsteil in die Sandwichplatte unmittelbar über den Kern der Sandwichplatte eingeleitet werden, so dass eine hochfeste Verbindung gegeben ist.

GB 2 437 946 A betrifft ein Solarenergiesystem für ein Fahrzeug, bei dem die Außenform des Fahrzeugkörpers durch verschiedene Teile gegeben ist, von denen wenigstens eines ein Solar-Panel sein soll. Konkret wird vorgeschlagen, dass das Composite-Material des Solar-Panels so geformt sein soll, dass die Form des Fahrzeug-Außenteils, beispielsweise der Motorhaube, gegeben ist.

JP 2014-113930 A betrifft ein strukturelles Bauteil für ein Fahrzeug zum Montieren eines Solarzellenmoduls, wobei das auf dem strukturellen Bauteil aufgebrachte Solarzellenmodul möglichst nicht durch externe Belastungen abfallen soll. Entsprechend wird vorgeschlagen, dass eine Rückseitenschutzschicht aus einem thermoplastischen Harz besteht, welches mit einem entsprechenden Material des strukturalen Bauteils des Fahrzeugs verschmolzen wird. Dabei ist eine bestimmte Art ein komplettes Modul anzubringen beschrieben, wobei das strukturelle Bauteil des Fahrzeugs allgemein als Instrumententafel, Mittelkonsole und dergleichen, oder auch Motorhaube, Frontsäule, Dachteil und dergleichen beschrieben ist.

DE 10 2005 050 372 A1 betrifft Beplankungsteile für eine Leichtbau-Karosserie, wobei vorgeschlagen wird, Verstärkungsstrukturen eines Kunststoffverbundteils nicht flächig auszubilden, sondern vielmehr stabförmig, so dass erst die Kombination zahlreicher Einzelelemente ein Flächengebilde ergibt. Dies erlaubt es, die Verstärkungsstrukturen derart weitmaschig anzuordnen, dass Solarzellen zwischen den Maschen der Verstärkungsstrukturen angeordnet werden können.

EP 1 512 613 A2 offenbart einen Deckel für ein Kraftfahrzeug der Sportwagengattung mit dynamisch anmutendem Styling und ansprechender Motorleistung.

Der Erfindung liegt daher die Aufgabe zugrunde, eine demgegenüber verbesserte, insbesondere vereinfacht herstellbare und dennoch die Vorteile von Faserverbundkunststoff bereitstellende Formklappe für ein Kraftfahrzeug anzugeben.

Zur Lösung dieser Aufgabe sind bei einer Klappe der eingangs genannten Art erfindungsgemäß die Merkmale des Anspruchs 1 vorgesehen.

Dabei bezieht sich die vorliegende Erfindung hauptsächlich auf Frontklappen, konkret Motorhauben, wobei jedoch auch andere Klappen des Kraftfahrzeugs, beispielsweise Heckklappen/Kofferraumdeckel, in der beschriebenen Art in nicht erfindungsgemäßen Ausführungsbeispielen ausgeführt werden können. Dabei wird bevorzugt die gesamte Außenfläche der Klappe durch das Außenteil gebildet, das bedeutet, das Innenteil ist bei geschlossener Klappe an dem Kraftfahrzeug von außen nicht zu sehen. Dies bringt auch den Vorteil mit sich, dass das Außenteil aus Faserverbundkunststoff (faserverstärktem Kunststoff) seine Materialeigenschaften über die gesamte Klappe bereitstellt, insbesondere seine Steifheit und/oder seine Fußgänger schützende Ausbildung, so dass die entsprechenden mechanischen Eigenschaften, die erforderlich sind, zugesichert werden. Ferner erlaubt die Verwendung der Faserverbundkunststoff-Außenteile das Aufbringen bzw. Integrieren von Solarzellen, die mithin in der Außenhaut eingebettet werden. Dabei hat sich gezeigt, dass die insbesondere auf den Fußgängerschutz bezogenen mechanischen Eigenschaften auch bei Verwendung eines Solarzellenabschnitts am Außenteil weiterhin erfüllt werden. Der Einsatz des Solarzellenabschnitts ist insbesondere geeignet, die Reichweite von elektrisch angetriebenen bzw. antreibbaren Kraftfahrzeugen zu erhöhen oder anderweitig nützliche elektrische Energie für das Kraftfahrzeug bereitzustellen.

Die Verwendung eines Außenteils aus Faserverbundkunststoff erlaubt es mithin vorteilhaft, bestimmte mechanische Eigenschaften, insbesondere bezüglich der Steifheit und/oder dem Fußgängerschutz, zu erfüllen und gleichzeitig eine für die Aufbringung des Solarzellenabschnitts geeignete Fläche bereitzustellen, während es der Einsatz eines aus Metall bestehenden Innenteils gestattet, bislang gängige, in Serienproduktion befindliche Innenteile auch weiterhin einzusetzen. Mit anderen Worten kann das Innenteil sozusagen "gemäß Serie" übernommen werden. Auf diese Weise werden Investitionskosten eingespart, denn durch Übernahme des Innenteils wird nur ein neues Werkzeug zur Fertigung des Außenteils aus Faserverbundkunststoff benötigt.

Zusammenfassend wird eine konstruktive Ausführung einer Faserverbundkunststoff-Metall-Hybridklappe mit Solarzellen vorgeschlagen, die ein metallisches Innenteil (insbesondere wie bisher in Serie) und ein Außenteil aus Faserverbundkunststoff aufweist, in das ein Solarzellenabschnitt eingebettet ist. Als Faserverbundkunststoff wird dabei bevorzugt ein Glasfaserverbundmaterial, ein Kohlenstofffaserverbundmaterial und/oder ein Naturfaserverbundmaterial verwendet. Im Herstellungsprozess wird auf das Außenteil ein Solarzellenabschnitt, insbesondere als Solarzellenmodul und/oder Solarzellenschicht, appliziert. Der restliche Umfang des die Platte bildenden Zusammenbaus wird gemäß Serie übernommen.

Dabei sei darauf hingewiesen, dass zur Herstellung des Außenteils beispielsweise das in der eingangs bereits genannten DE 10 2015 011 806 A1 beschriebene Vorgehen herangezogen werden kann. Sämtliche dort genannten Ausgestaltungen, insbesondere auch bezüglich der umlaufenden Kante, lassen sich analog auf das Außenteil der vorliegenden Erfindung übertragen, wobei der restliche Herstellungsprozess weitgehend, gegebenenfalls mit kleineren Anpassungen, aus dem Stand der Technik übernommen werden kann, da bereits bestehende Technik in Form des metallischen Innenteils herangezogen wird. Das metallische Innenteil besteht dabei bevorzugt aus Aluminium, kann jedoch aus einem anderen Metall, insbesondere aus Stahl, bestehen. Die Verwendung eines metallischen Innenteils hat den weiteren Vorteil, dass dieses auf vereinfachte Art bereits für die Wechselwirkung mit dem restlichen Kraftfahrzeug erforderliche Komponenten aufweisen kann. So kann konkret vorgesehen sein, dass das Innenteil wenigstens eine Scharnierkomponente eines zum Öffnen und Schließen der Klappe zu verwendenden Scharniers und/oder wenigstens einen Fanghaken umfasst. Für diese Komponenten muss daher keine aufwändige Speziallösung bereitgestellt werden. Zweckmäßigerweise können das Außenteil und das Innenteil mit wenigstens einem Klebstoff, insbesondere einem Unterfütterungskleber, verklebt sein. Zur Verbindung des Außenteils und des Innenteils lassen sich auch anderweitig bereits bei zweiteiligen Klappen, insbesondere bei beidseits metallischen Klappen, eingesetzte Klebstoffe weiterverwenden, wobei sich ein Unterfütterungskleber bislang als ausreichend erwiesen hat. Denkbar ist es in Ausführungsbeispielen jedoch auch, zumindest am Randbereich der Klappe einen Strukturkleber als Klebstoff zu verwenden.

Der Solarzellenabschnitt ist erfindungsgemäß als eine Folie auf den Faserverbundstoff des Außenteils aufgebracht. Der Solarzellenabschnitt stellt sich dann als eine Beschichtung des Faserverbundstoffs dar. Entsprechende Konzepte für folienartige Solarzellenschichten wurden im Stand der Technik bereits vorgeschlagen, wobei rein beispielhaft auf DE 10 2012 200 864 A1 und DE 10 2010 000 657 B4 verwiesen sei. Konkret kann auch ein von der Anmelderin in einer parallelen Patentanmeldung beschriebenes photovoltaisch aktives Laminat eingesetzt werden, welches mindestens eine die Laminatoberseite bildende, für einfallende Lichtstrahlung transparente Deckfolie, eine photovoltaisch aktive Solarzellenfolie sowie eine Trägerschicht aus einem Faserverbundwerkstoff aufweist. Ein derartiges photovoltaisch aktives Laminat ist äußerst dünn und insgesamt flexibel, kann mithin aufgrund seiner Flexibilität an der Kraftfahrzeugaußenhaut angebracht werden, auch wenn diese nicht ebenflächig ist, sondern, wie beispielsweise im Falle einer Frontklappe bzw. Motorhaube, gewölbt ist oder entsprechend enge Radien etc. aufweist. Dabei beeinflussen die mechanischen Eigenschaften des photovoltaisch aktiven Laminats die mechanischen Eigenschaften des Außenteils nicht nennenswert, wie bereits dargelegt.

In anderen Ausgestaltungen ist es im Übrigen auch denkbar, eine Solarzellenfolie unmittelbar auf den Faserverbundkunststoff des Außenteils aufzubringen. Derartige photovoltaisch aktive Solarzellenfolien sind äußerst dünne Folien mit daran entsprechend ausgebildeten Solarzellen. Solche flexiblen Solarzellenfolien bestehen aus einer extrem dünnen Trägerfolie, beispielsweise aus Polyimid, auf die eine photovoltaisch aktive Schicht beispielsweise aus Cadmiumtellurid (CdTe) aufgebracht wird, die gegebenenfalls rückseitig von einer weiteren extrem dünnen Trägerfolie beispielsweise aus Polyimid eingefasst ist. Der gesamte Folien- oder Schichtaufbau ist extrem dünn und daher äußerst flexibel. Auf die beim photovoltaisch aktiven Laminat beschriebene Deckschicht kann im Rahmen der vorliegenden Erfindung gegebenenfalls auch verzichtet werden, wenn der Schutz der Solarzellenfolie anderweitig sichergestellt werden kann.

In einer besonders vorteilhaften Ausführungsform der vorliegenden Erfindung kann dabei vorgesehen sein, dass der Solarzellenabschnitt mit einer transparenten Lackschicht überzogen ist. Versuche im Rahmen der vorliegenden Erfindung haben gezeigt, dass derartige transparente Lackschichten die Funktionsfähigkeit beispielsweise einer Solarzellenfolie nicht relevant beeinträchtigen und gleichzeitig als eine schützende Schicht, sei es zusätzlich zu einer Deckschicht oder alternativ zu einer Deckschicht, dienen. Dabei kann der Lack der Lackschicht beispielsweise ein Epoxilack und/oder ein Polyimidlack sein. Eine derartige Ausgestaltung ermöglichst es zum einen, im Solarzellenabschnitt auf eine entsprechende Schutzschicht/Deckschicht zu verzichten bzw. diese einfacher auszugestalten, zum anderen aber, die Außenfläche letztlich komplett in einem Durchgang zu lackieren, was nicht nur dem Erscheinungsbild, sondern auch der Robustheit zuträglich ist.

Wie bereits dargelegt wurde, ist die Klappe als eine Frontklappe, konkret als eine Motorhaube, ausgebildet. Gerade an eine Motorhaube werden bestimmte Anforderungen hinsichtlich der Steifigkeit und/oder des Fußgängerschutzes gestellt, die mittels des Faserverbundkunststoff-Außenteils erfülltt werden können. Zudem bietet eine Motorhaube eine große Außenfläche, die nach oben gerichtet ist und Platz für Solarzellen des Solarzellenabschnitts bietet.

Neben der Klappe betrifft die vorliegende Erfindung auch ein Kraftfahrzeug, aufweisend wenigstens eine erfindungsgemäße Klappe. Die Klappe ist als eine Motorhaube ausgebildet. Sämtliche Ausführungen bezüglich der erfindungsgemäßen Klappe lassen sich entsprechend auf das erfindungsgemäße Kraftfahrzeug übertragen, mit welchem mithin ebenso die bereits genannten Vorteile erhalten werden können.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine erfindungsgemäße Klappe in Form einer Motorhaube,
- Fig. 2: die Klappe in Explosionsdarstellung aus einer ersten Blickrichtung,
- Fig. 3: die Klappe in Explosionsdarstellung aus einer anderen Blickrichtung,
- Fig. 4: die Verbindung des Innenteils und des Außenteils der Klappe,
- Fig. 5: den Schichtaufbau im Bereich des Solarzellenabschnitts, und
- Fig. 6: ein erfindungsgemäßes Kraftfahrzeug.

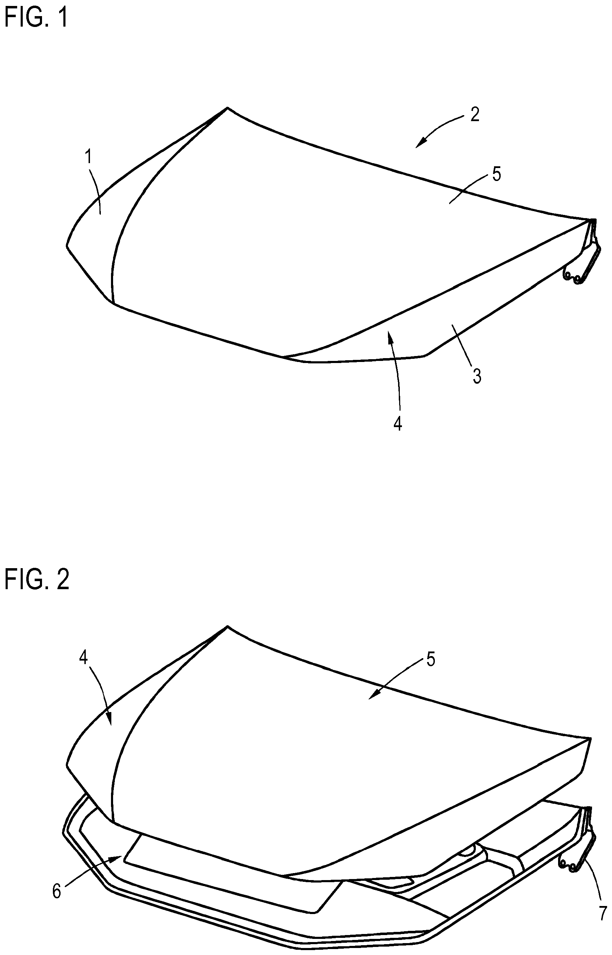

Fig. 1 zeigt eine Aufsicht auf eine erfindungsgemäße, als Motorhaube 1 ausgebildete Klappe 2 für ein Kraftfahrzeug. Die Klappe 2 weist ein eine Außenfläche 3 des Kraftfahrzeugs bereitstellendes Außenteil 4 auf, das aus einem Faserverbundkunststoff besteht und in das, vorliegend einen Großteil der Außenfläche 3 belegend, ein Solarzellenabschnitt 5 eingebettet ist.

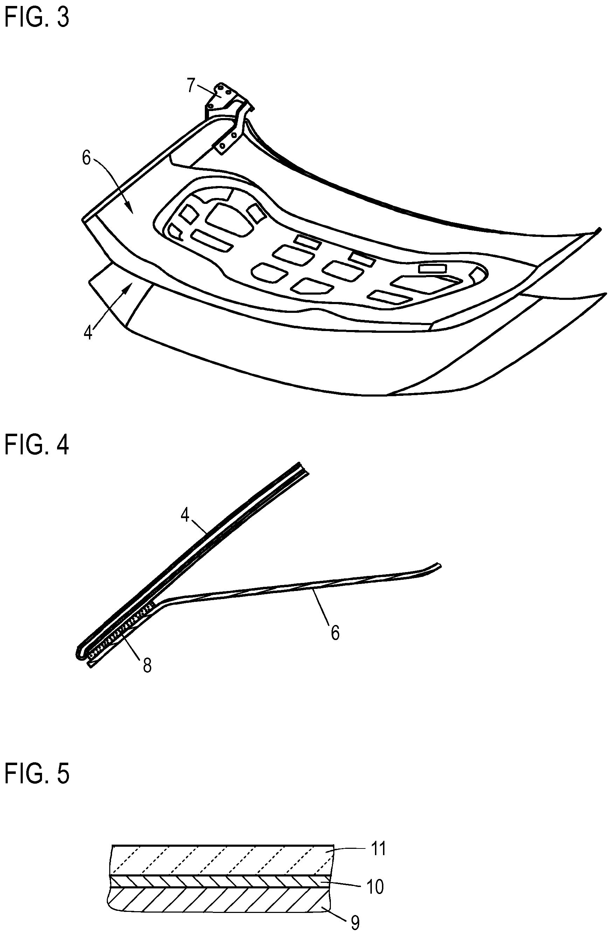

Die Fig. 2 und 3 zeigen in einer Explosionsansicht, dass die Klappe 2 neben dem Außenteil 4 auch ein Innenteil 6 aufweist, das aus Metall, vorliegend Aluminium, besteht. Das Innenteil 6 kann aus der Serienfertigung vollständig aus Metall bestehender Motorhauben weiterverwendet werden und weist entsprechend auch bereits Komponenten zur Wechselwirkung mit weiteren Teilen des Kraftfahrzeugs auf, wobei vorliegend beispielhaft eine Scharnierkomponente 7 eines zum Öffnen und Schließen der Klappe 2 zu verwendenden Scharniers gezeigt ist. Weitere derartige Komponenten des metallischen Innenteils 6 können beispielsweise Fanghaken umfassen.

Fig. 4 zeigt die Verbindung des Außenteils 4 mit dem Innenteil 6. Dabei wird wenigstens ein Klebstoff 8 verwendet, der wenigstens teilweise als Unterfütterungskleber, wenigstens teilweise aber auch als Strukturkleber, insbesondere in den Außenbereichen, ausgebildet sein kann. Es hat sich jedoch gezeigt, dass als Klebstoff 8 auch durchgängig Unterfütterungskleber verwendet werden kann.

Der Faserverbundkunststoff des Außenteils 4 kann als Fasern Glasfasern, Kohlenstofffasern und/oder Naturfasern umfassen und beispielsweise eine Dicke von 1,2 - 2 mm aufweisen. Das Innenteil besteht vorliegend aus Aluminium und kann eine Dicke von 0,8 - 1 mm, insbesondere 0,9 mm, aufweisen.

Fig. 5 zeigt eine mögliche, bevorzugte Realisierung des Solarzellenabschnitts 5. Auf den Faserverbundkunststoff 9 des Außenteils 4 ist eine photovoltaisch aktive Solarzellenschicht 10 aufgebracht, die beispielsweise zwischen zwei dünnen Polyimidfolien als Trägerschichten angeordnete Solarzellen aufweisen kann. Als Schutzschicht bzw. Deckschicht für die Solarzellenschicht 10 dient vorliegend eine Lackschicht 11 aus einem Epoxilack oder Polyimidlack, die durch übliches Lackieren über die Solarzellenfolie 10 aufgebracht ist. Die Lackschicht 11 ist dabei transparent, so dass Licht zu den Solarzellen der Solarzellenschicht 10 vordringen kann.

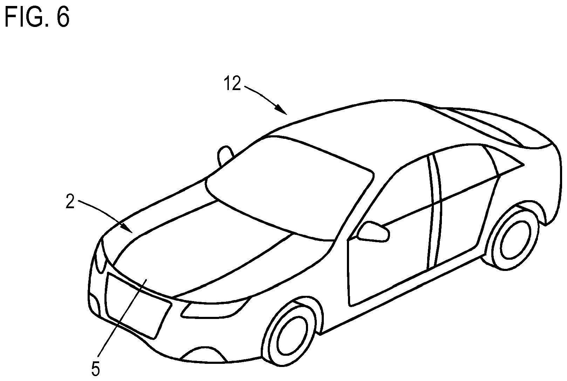

Fig. 6 zeigt schließlich ein erfindungsgemäßes Kraftfahrzeug 12 in perspektivischer Ansicht. Die Klappe 2 wird ersichtlich als Motorhaube 1 eingesetzt.

## Patentansprüche

1. Klappe (2) für ein Kraftfahrzeug (12), aufweisend einen Zusammenbau aus einem eine im Einbauzustand nach Außen gewandte Außenfläche (3) umfassenden Außenteil (4) aus einem Faserverbundkunststoff (9) und einem gegenüberliegenden, getrennt von dem Außenteil hergestellten Innenteil (6), wobei die Klappe (2) als eine Motorhaube (1) ausgebildet ist,
wobei das Innenteil (6) aus Metall, insbesondere Aluminium, gefertigt ist, **dadurch gekennzeichnet, dass** das Außenteil (4) auf der Außenfläche (3) aufgebracht und/oder in diese integriert einen wenigstens eine Solarzelle aufweisenden Solarzellenabschnitt (5) aufweist, wobei der Solarzellenabschnitt (5) als eine Folie (10) auf den Faserverbundkunststoff (9) des Außenteils (4) aufgebracht ist.

2. Klappe (2) nach Anspruch 1,
**dadurch gekennzeichnet,**
**dass** das Innenteil (6) wenigstens eine Scharnierkomponente (7) eines zum Öffnen und Schließen der Klappe (2) zu verwendenden Scharniers und/oder wenigstens einen Fanghaken umfasst.

3. Klappe (2) nach Anspruch 1 oder 2,
**dadurch gekennzeichnet,**
**dass** das Außenteil (4) und das Innenteil (6) mit wenigstens einem Klebstoff (8), insbesondere einem Unterfütterungskleber, verklebt sind.

4. Klappe (2) nach einem der vorangehenden Ansprüche,
**dadurch gekennzeichnet,**
**dass** der Solarzellenabschnitt (5) mit einer transparenten Lackschicht (11) überzogen ist.

5. Klappe (2) nach Anspruch 4,
**dadurch gekennzeichnet,**
**dass** der Lack (11) der Lackschicht ein Epoxilack und/oder ein Polyimidlack ist.

6. Kraftfahrzeug (12), aufweisend wenigstens eine Klappe (2) nach einem der vorangehenden Ansprüche.

## Claims

1. Flap (2) for a motor vehicle (12), having an assembly made of an outer part (4) which comprises an outer surface (3) facing outwards in the fitted state and which is made of a fibre composite plastic (9), and an opposite inner part (6) manufactured separately from the outer part, wherein the flap (2) is designed as a bonnet (1),
wherein the inner part (6) is manufactured from metal, in particular aluminium, **characterised in that** the outer part (4), applied to the outer surface (3) and/or integrated into the latter, has at least one solar cell section (5) having a solar cell, wherein the solar cell section (5) is applied as a film (10) to the fibre composite plastic (9) of the outer part (4).

2. Flap (2) according to claim 1,
**characterised in that**
the inner part (6) comprises at least one hinge component (7) of a hinge to be used for opening and closing the flap (2) and/or at least one arrester hook.

3. Flap (2) according to claim 1 or 2,
**characterised in that**
the outer part (4) and the inner part (6) are glued together using at least one adhesive (8), in particular a lining adhesive.

4. Flap (2) according to any of the preceding claims,
**characterised in that**
the solar cell section (5) is coated with a transparent lacquer coat (11).

5. Flap (2) according to claim 4,
**characterised in that**
the lacquer (11) of the lacquer coat is an epoxy lacquer and/or a polyimide lacquer.

6. Motor vehicle (12) having at least one flap (2) according to any of the preceding claims.

## Revendications

1. Capot (2) pour un véhicule automobile (12) présentant un assemblage d'une partie extérieure (4) comprenant une surface extérieure (3) tournée dans l'état monté vers l'extérieur en une matière plastique composite renforcée par des fibres (9) et une partie intérieure (6) opposée, fabriquée séparément de la partie extérieure, dans lequel le capot (2) est réalisé comme un capot moteur (1),
dans lequel la partie intérieure (6) est fabriquée en métal, en particulier en aluminium, **caractérisé en ce que** la partie extérieure (4) est appliquée sur la surface extérieure (3) et/ou intégrée dans celle-ci présente une section de cellule solaire (5) présentant au moins une cellule solaire, dans lequel la section de cellule solaire (5) est appliquée comme un film (10) sur la matière plastique composite renforcée par des fibres (9) de la partie extérieure (4).

2. Capot (2) selon la revendication 1,
**caractérisé en ce**
**que** la partie intérieure (6) comporte au moins un composant de charnière (7) d'une charnière à utiliser pour l'ouverture et la fermeture du capot (2) et/ou au moins un crochet d'arrêt.

3. Capot (2) selon la revendication 1 ou 2,
**caractérisé en ce**
**que** la partie extérieure (4) et la partie intérieure (6) sont collées avec au moins une colle (8), en particulier une colle de rebasage.

4. Capot (2) selon l'une quelconque des revendications précédentes,
**caractérisé en ce**
**que** la section de cellule solaire (5) est revêtue d'une couche de vernis (11) transparente.

5. Capot (2) selon la revendication 4,
**caractérisé en ce**
**que** le vernis (11) de la couche de vernis est un vernis époxy et/ou un vernis de polyimide.

6. Véhicule automobile (12) présentant au moins un capot (2) selon l'une quelconque des revendications précédentes.
